# EUROPÄISCHE PATENTSCHRIFT

(11) **EP 1 330 501 B1**
(45) Veröffentlichungstag und Bekanntmachung des Hinweises auf die Patenterteilung: **14.12.2005**
(21) Anmeldenummer: 01954040.0
(22) Anmeldetag: 13.07.2001
(51) Int. Cl.: C09D 183/04, C09D 183/02, C09D 4/00, C09D 183/08, C08K 5/00

(54) **MIKROBIZID BESCHICHTETER GEGENSTAND, VERFAHREN ZU DESSEN HERSTELLUNG UND DESSEN VERWENDUNG**
OBJECT HAVING A MICROBICIDE COATING, METHOD FOR THE PRODUCTION THEREOF AND USE OF THE SAME
OBJET A REVETEMENT MICROBICIDE, SON PROCEDE DE FABRICATION ET SON UTILISATION

(30) Priorität: 02.11.2000 DE 10054248
(43) Veröffentlichungstag der Anmeldung: 30.07.2003
(73) Patentinhaber: INSTITUT FÜR NEUE MATERIALIEN GEM. GMBH, 66123 Saarbrücken (DE); URSAPHARM Arzneimittel GmbH & Co. KG, 66129 Saarbrücken (DE)
(72) Erfinder: SCHIESTEL, Thomas, 70565 Stuttgart (DE); SCHIRRA, Hermann, 66111 Saarbrücken (DE); SCHMIDT, Helmut, 66130 Saarbrücken-Güdingen (DE); BUXMANN, Detmar, 66121 Saarbrücken (DE)
(74) Vertreter: Barz, Peter
(86) Internationale Anmeldenummer: PCT/EP2001/008167
(87) Internationale Veröffentlichungsnummer: WO 2002/036701

(56) Entgegenhaltungen:
- EP-A- 0 459 003
- EP-A- 0 518 142
- DE-A- 4 329 279
- DE-A- 19 935 230
- US-A- 4 571 365
- PATENT ABSTRACTS OF JAPAN vol. 1998, no. 06, 30. April 1998 (1998-04-30) & JP 10 036713 A (NISSHIN STEEL CO LTD), 10. Februar 1998 (1998-02-10)
- PATENT ABSTRACTS OF JAPAN vol. 1999, no. 01, 29. Januar 1999 (1999-01-29) & JP 10 279885 A (NITSUPAN KENKYUSHO:KK;HOKKAI CAN CO LTD), 20. Oktober 1998 (1998-10-20)
- PATENT ABSTRACTS OF JAPAN vol. 015, no. 017 (C-0796), 14. Januar 1991 (1991-01-14) & JP 02 264074 A (YOSHIO ICHIKAWA), 26. Oktober 1990 (1990-10-26)
- PATENT ABSTRACTS OF JAPAN vol. 1996, no. 05, 31. Mai 1996 (1996-05-31) & JP 08 027404 A (NIPPON SHEET GLASS CO LTD), 30. Januar 1996 (1996-01-30)

## Beschreibung

Die vorliegende Erfindung betrifft mikrobizid beschichtete Gegenstände, insbesondere Behälter, deren Beschichtung eine Silberkolloide enthaltende, organisch modifizierte anorganische Matrix aufweist, ein Verfahren zu deren Herstellung und die Verwendung für desinfizierende, konservierende oder medizinische Zwecke.

Es ist bekannt, daß Silberionen eine stark mikrobizide Wirkung ausüben. Die mikrobizide Wirkung der Silberionen zeigt sich auch dann, wenn silberhaltige Verbindungen in einer Matrix, z.B. einer Polymermatrix mit einem ausreichend freien Volumen, vorhanden sind und selbst wenn Silberkolloide in eine Matrix eingebunden werden (siehe z.B. JP 10*-*279885). Eine ausreichende Diffusionsgeschwindigkeit von Silberionen an die Oberfläche ist dabei notwendig. Das Silber kann z.B. in Form von löslichen Verbindungen in Lacklösungen oder in Form von silberkolloidhaltigen Lösungen eingesetzt werden, um mikrobizide Beschichtungen zu erhalten.

Lösliche Silberverbindungen haben in der Regel den Nachteil, daß sie relativ rasch diffundieren und ihre Wirkung relativ schnell erschöpft ist, insbesondere wenn ein Kontakt mit Lösungen besteht. Zur Herstellung von silberkolloidhaltigen Beschichtungszusammensetzungen können die Silberkolloide in eine Beschichtungszusammensetzung eingemischt werden. Dies hat jedoch den generellen Nachteil, daß stabile Silberkolloidlösungen notwendig sind, deren Stabilität in der Regel durch eine elektrostatische Stabilisierung (pH-Stabilisierung) erfolgen muß, d.h. es sind protische Lösungsmittel erforderlich und es müssen bestimmte pH-Werte eingestellt werden, so daß für viele Beschichtungssysteme eine Zugabe von Silberkolloiden nicht möglich ist.

Bei einem anderen Verfahren werden Silberkolloide in einer Beschichtungszusammensetzung aus glasbildenden Elementen aus Silberverbindungen in situ während des Beschichtungsverfahrens erzeugt, so daß Beschichtungen erhalten werden, die Silberkolloide in einer Glasmatrix enthalten. Nachteil dieses Verfahrens ist jedoch, daß spröde Beschichtungen gebildet werden und zur Bildung der silberkolloidhaltigen Glasmatrix sehr hohe Temperaturen erforderlich sind. Dieses Verfahren ist daher für die Beschichtung von temperaturempfindlichen Gegenständen ungeeignet.

Der Erfindung liegt die Aufgabe zugrunde, auch temperaturempfindliche Gegenstände mit einer silberkolloidhaltigen Beschichtung versehen zu können, wobei in situ erzeugte Silberkolloide bereits bei relativ niedrigen Temperaturen hergestellt werden können und auch die Härtung der Beschichtung bei relativ niedrigen Temperaturen erfolgen kann. Gleichzeitig sollen größere Kolloide möglich sein, da diese eine hohe Langzeitwirkung aufweisen. Außerdem soll eine Beschichtung mit hoher Elastizität möglich sein, die auch auf Gegenständen mit flexibler Oberfläche anwendbar ist.

Überraschenderweise werden diese Anforderungen durch den mikrobizid beschichteten Gegenstand, insbesondere einen Behälter, der vorliegenden Erfindung erreicht, wobei auf mindestens einem Teil des Gegenstandes eine Beschichtung mit einer Silberkolloide enthaltenden, organisch modifizierten anorganischen Matrix vorhanden ist, die erhältlich ist durch Aufbringen einer Beschichtungszusammensetzung umfassend a) ein Hydrolysat oder Kondensat auf Basis von mindestens einem hydrolysierbaren Silan mit mindestens einem nicht hydrolysierbaren Substituenten und b) eine Silber-Komplexverbindung, auf die Oberfläche des Gegenstandes und Behandlung mit Wärme und/oder Strahlung unter Bildung der silberkolloidhaltigen Beschichtung.

Ein weiterer Gegenstand der vorliegenden Erfindung ist ein Verfahren zur Herstellung eines mikrobizid beschichteten Gegenstandes mit einer silberkolloidhaltigen Beschichtung, die eine organisch modifizierte anorganische Matrix aufweist, bei dem man eine Beschichtungszusammensetzung, umfassend a) ein Hydrolysat oder Kondensat auf Basis von mindestens einem hydrolysierbaren Silan mit mindestens einem nicht hydrolysierbaren Substituenten und b) eine Silber-Komplexverbindung, auf zumindest einem Teil der Oberfläche des Gegenstandes aufbringt und mit Wärme und/oder Strahlung unter Bildung der silberkolloidhaltigen Beschichtung behandelt.

Durch den Gegenstand der Erfindung können silberkolloidhaltige Beschichtungen bei niedrigen Temperaturen erhalten werden, so daß sie für temperaturempfindliche Gegenstände geeignet sind. Eine hohe Elastizität der Schicht ermöglicht eine Beschichtung flexibler Gegenstände. Die erfindungsgemäß beschichteten Gegenstände zeichnen sich durch eine stark mikrobizide Wirkung aus.

Bei dem zu beschichtenden Gegenstand kann es sich um jeden beliebigen Gegenstand handeln. Wegen der mikrobiziden Wirkung eignen sich die erfindungsgemäß beschichteten Gegenstände insbesondere für desinfizierende, konservierende, kosmetische oder pharmazeutische bzw. medizinische Zwecke. Für Gegenstände im pharmazeutischen bzw. medizinischen Bereich, z.B. für beschichtete Behälter für Arzneimittel oder für Gegenstände bzw. Komponenten, die mit dem menschlichen Körper in Berührung kommen und keimfrei bleiben sollen, ist die vorliegende Erfindung besonders geeignet.

Bevorzugt handelt es sich daher um einen Gegenstand zur Aufbewahrung von festen (z. B. salbenartigen), flüssigen oder gasförmigen Medien, insbesondere zur Aufbewahrung von flüssigen Medien, z.B. Lösungen. Bei den Behältern kann es sich z.B. um Flaschen, Fläschchen, Ampullen, (verschließbare) Beutel, Verpackungen, wie Blister, Dosen, Sprühflaschen oder -dosen und Tuben handeln. Bei den aufzubewahrenden Medien handelt es sich insbesondere um Arzneimittel, bevorzugt in flüssiger Form, z.B. als Lösung, oder andere im medizinischen Bereich verwendete Medien, z.B. isotone Kochsalzlösungen und Aufbewahrungs- oder Reinigungsmittel für Kontaktlinsen. Besonders bevorzugt sind Behälter für Nasensprays und Augentropfen. Natürlich können die Behälter auch auf anderen Gebieten verwendet werden.

Weitere bevorzugte Gegenstände, die erfindungsgemäß beschichtet werden, sind im medizinischen Bereich verwendete Gegenstände oder Geräte oder Teile davon, z.B. Operationsinstrumente, Tabletts und Schläuche.

Der Gegenstand kann vollständig oder teilweise beschichtet werden. Beispielsweise kann es zweckmäßig sein, Behälter wie Arzneimittelfläschchen nur auf den innen befindlichen Oberflächen zu beschichten, während die äußere Oberfläche unbeschichtet bleibt. Der Gegenstand kann aus einem oder mehreren Materialien bestehen, z.B. können verschiedene Komponenten des Gegenstandes aus verschiedenen Materialien bestehen.

Der zu beschichtende Gegenstand bzw. der Teil des Gegenstandes der beschichtet wird (Substrat) kann aus jedem beliebigen Material sein, z. B. aus Metall, Glas, Keramik, Glaskeramik, Kunststoff oder Papier. Da ein besonderer Vorteil der vorliegenden Erfindung darin besteht, daß silberkolloidhaltige Beschichtungen erhalten werden können, ohne daß hohe Temperaturen eingesetzt werden müssen, ist die Erfindung für thermisch empfindliche Gegenstände besonders geeignet. Daher werden bevorzugt Gegenstände bzw. Teile von Gegenständen aus Kunststoff verwendet. Beispiele für Kunststoffe sind Polyethylen, Polypropylen, Polyacrylat, wie Polymethylmethacrylat und Polymethylacrylat, Polyvinylbutyral, Polycarbonat, Polyurethane, ABS-Copolymere oder Polyvinylchlorid, wobei Polyethylen besonders bevorzugt ist. Der Gegenstand kann auf die übliche Weise vorbehandelt werden, z. B. um eine Reinigung, eine Entfettung oder eine bessere Haftung mit der Beschichtung zu erreichen. Selbstverständlich kann das zu beschichtende Teil des Gegenstandes als Substrat zunächst separat beschichtet werden und danach zum fertigen Gegenstand zusammengefügt werden.

Die eingesetzte Beschichtungszusammensetzung umfaßt a) ein Hydrolysat oder Kondensat auf Basis von mindestens einem hydrolysierbaren Silan mit mindestens einem nicht hydrolysierbaren (kohlenstoffhaltigen) Substituenten und b) eine Silber-Komplexverbindung. Das Hydrolysat oder Kondensat wird bevorzugt durch teilweise Hydrolyse oder Kondensation von einem oder mehreren Silanen der allgemeinen Formel (I)

RₐSiX₍₄₋ₐ₎ (I)

erhalten, worin die Reste R gleich oder verschieden sind und nicht hydrolysierbare Gruppen darstellen, die Reste X gleich oder verschieden sind und hydrolysierbare Gruppen oder Hydroxylgruppen bedeuten und a den Wert 1, 2 oder 3 hat, wobei ein Wert von 1 bevorzugt ist.

Bei den Organosilanen der Formel (I) sind die hydrolysierbaren Gruppen X beispielsweise Wasserstoff oder Halogen (F, Cl, Br oder I, insbesondere Cl und Br), Alkoxy (vorzugsweise C₁₋₆-Alkoxy, insbesondere C₁₋₄-Alkoxy, wie z.B. Methoxy, Ethoxy, n-Propoxy, i-Propoxy, n-Butoxy, i-Butoxy, sek.-Butoxy und tert.-Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino, wobei die Alkylgruppen vorzugsweise 1 bis 12, insbesondere 1 bis 6 Kohlenstoffatome, aufweisen. Bevorzugte hydrolysierbare Reste sind Halogen, Alkoxygruppen und Acyloxygruppen. Besonders bevorzugte hydrolysierbare Reste sind Alkoxygruppen, insbesondere Methoxy und Ethoxy.

R ist ein nicht hydrolysierbarer organischer Rest, der gegebenenfalls eine funktionelle Gruppe tragen kann. Beispiele für R sind Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl).

Spezielle Beispiele für funktionelle Gruppen des Restes R sind, neben den bereits vorstehend genannten Gruppen mit ungesättigten C-C-Bindungen, die Epoxy-, Hydroxy-, Ether-, Amino-, Monoalkylamino-, Dialkylamino-, z.B. mit den vorstehend definierten C₁₋₆-Alkylgruppen, Amid-, Carboxy-, Mercapto-, Thioether-, Vinyl-, Isocyanat-, Acryloxy-, Methacryloxy-, Säureanhydrid-, Säurehalogenid-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R enthalten vorzugsweise 1 bis 18, insbesondere 1 bis 8 Kohlenstoffatome. Die genannten Reste R und X können gegebenenfalls einen oder mehrere übliche Substituenten, wie z.B. Halogen oder Alkoxy, aufweisen.

Bevorzugt enthält mindestens eines der eingesetzten hydrolysierbaren Silane mit mindestens einem nicht hydrolysierbaren Substituenten an dem nicht hydrolysierbaren Substituenten eine der vorstehend genannten funktionellen Gruppen. Über diese funktionelle Gruppe kann dann eine organische Vernetzung erfolgen, z.B. durch Reaktion der funktionellen Gruppen an den Silanen untereinander, wobei unterschiedliche oder gleiche funktionelle Gruppen miteinander reagieren können, oder mit funktionellen Gruppen an den nachstehend beschriebenen organischen Verbindungen, die ebenfalls in der Beschichtungszusammensetzung enthalten sein können.

Bevorzugte funktionelle Gruppen sind die Epoxid-, Säureanhydrid- und Aminogruppe, wobei eine Kombination von mindestens einem hydrolysierbaren Silan, das an mindestens einem nicht hydrolysierbaren Substituenten eine oder mehrere Epoxidgruppen aufweist, und mindestens einem hydrolysierbaren Silan, das an mindestens einem nicht hydrolysierbaren Substituenten eine oder mehrere Aminogruppen aufweist, besonders bevorzugt ist. Ganz besonders bevorzugt ist eine Kombination, die neben einem Epoxidsilan und einem Aminosilan zusätzlich mindestens ein hydrolysierbares Silan enthält, das an mindestens einem nicht hydrolysierbaren Substituenten eine oder mehrere Säureanhydridgruppen aufweist

Bei den bevorzugten Epoxidsilanen der obigen allgemeinen Formel (I) hat a einen Wert von 1, X ist vorzugsweise C₁₋₄-Alkoxy, besonders bevorzugt Methoxy und Ethoxy, und R ist ein nicht hydrolysierbarer Rest mit mindestens einer Epoxidgruppe, z. B. ein aliphatischer, cycloaliphatischer oder aromatischer Rest, insbesondere Alkylen, z. B. C₁-C₆-Alkylen, wie Methylen, Ethylen, Propylen und Butylen, mit mindestens einer Epoxidgruppe. Der Rest R ist bevorzugt ein Glycidyloxy-(C₁₋₆)-alkylen-Rest. Konkrete Beispiele sind β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)-ethyl. Besonders bevorzugt eingesetzte Epoxidsilane sind γ-Glycidyloxypropyltrimethoxysilan (GPTS) und γ-Glycidyloxypropyltriethoxysilan (GPTES).

Bevorzugte Aminosilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht hydrolysierbarer Rest mit mindestens einer Aminogruppe ist, z. B. ein aliphatischer, cycloaliphatischer oder aromatischer Rest, insbesondere Alkylen, z. B. C₁-C₆ Alkylen, wie Methylen, Ethylen, Propylen und Butylen, mit mindestens einer primären, sekundären oder tertiären Aminogruppe. Beispielsweise ist R eine R¹₂N-{Alkylen-NR¹)ₓ-alkylen-Rest, worin x 0 bis 5 ist, die Alkylengruppen gleich oder verschieden sein können und insbesondere die vorstehend genannten sein können, und R¹ gleich oder verschieden ist und Wasserstoff oder ein gegebenenfalls substituierter Alkylrest, z.B. die in obiger allgemeinen Formel (I) genannten, ist R¹ kann auch ein zweiwertiger Rest, z.B. Alkylen, unter Bildung eines heterocyclischen Rings sein. Gegebenenfalls kann auch ein weiterer nicht hydrolysierbarer Rest, z.B. Alkyl, vorhanden sein (a = 2). Konkrete Beispiele für derartige Silane sind 3-Aminopropyltrimethoxysilan (APTS), 3-Aminopropyltriethoxysilan, N-(2-Aminoethyl)-3-aminopropyltrimethoxysilan, N-[N'-(2'-Aminoethyl)-2-aminoethyl]-3-aminopropyltrimethoxysilan, N-[3-(Triethoxysilyl)propyl]-4,5-dihydroimidazol und [N-(2-Aminoethyl)-3-aminopropyl]-methyldiethoxysilan. Besonders bevorzugt ist 3-Aminopropyltrimethoxysilan (APTS).

Bevorzugte Anhydridsilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht hydrolysierbarer Rest mit mindestens einer Anhydridgruppe ist, z. B. eine aliphatischer, cycloaliphatischer oder aromatischer Rest, insbesondere Alkylen, z. B. C₁-C₈ Alkylen, insbesondere C₁-C₄-Alkylen, wie Methylen, Ethylen, Propylen und Butylen, mit einer Anhydridgruppe. Bei der Anhydridgruppe, die ebenso wie die Epoxidgruppe zur Kondensation mit Aminogruppen befähigt ist, kann es sich z. B. um Reste handeln, die sich von Carbonsäureanhydriden, wie Bemsteinsäureanhydrid, Maleinsäureanhydrid oder Phthalsäureanhydrid, ableiten, die über einen der vorstehend genannten Reste, insbesondere C₁-C₄-Alkylen mit dem Siliciumatom verbunden sind. Beispiele sind [3-(Triethoxysilyl)propyl]bernsteinsäureanhydrid (Dihydro-3-(3-triethoxysilyl)propyl)-2,5-furandion, GF20) und [3-(Trimethoxysilyl)propyl]bernsteinsäureanhydrid.

Gegebenenfalls können auch hydrolysierbare Silane oder Vorkondensate davon verwendet werden, die zumindest zum Teil organische Reste aufweisen, die mit Fluor substituiert sind. Hierfür können beispielsweise hydrolysierbare Siliciumverbindungen der allgemeinen Formel (I) mit mindestens einem nicht hydrolysierbaren Rest R eingesetzt werden, der z.B. durchschnittlich 2 bis 30 Fluoratome an Kohlenstoffatome gebunden aufweist, die vorzugsweise durch mindestens zwei Atome von Si getrennt sind. Als hydrolysierbare Gruppen können dabei z. B. solche eingesetzt werden, wie sie in Formel (I) für X angegeben sind. Konkrete Beispiele für Fluorsilane sind C₂F₅-CH₂CH₂-SiZ₃, n-C₆F₁₃-CH₂CH₂-SiZ₃, n-C₈F₁₇-CH₂CH₂-SiZ₃, n-C₁₀F₂₁-CH₂CH₂-SiZ₃ mit Z = OCH₃, OC₂H₅ oder Cl, i-C₃F₇O-CH₂CH₂CH₂-SiCl₂(CH₃), n-C₆F-CH₁₃-CH₂CH₂-SiCl₂(CH₃) und n-CF₆-CH₂CH₂-SiCl(CH₃)₂. Die Verwendung eines derartigen fluorierten Silans führt dazu, daß dem entsprechenden Überzug zusätzlich hydrophobe und oleophobe Eigenschaften verliehen werden. Derartige Silane werden in der DE 4118184 detailliert beschrieben. Bevorzugt beträgt der Anteil an fluorierten Silanen nicht mehr als 0,5 bis 2 Gew.-% bezogen auf das gesamte eingesetzte organisch modifizierte anorganische Polykondensat.

Von den eingesetzten hydrolysierbaren Silanen mit mindestens einem nicht hydrolysierbaren Substituenten für das Hydrolysat oder Kondensat weisen bevorzugt mindestens 40 Mol-%, bevorzugt mindestens 70 Mol-%, besonders bevorzugt mindestens 90 Mol-%, an mindestens einem nicht hydrolisierbaren Substituenten mindestens eine funktionelle Gruppe auf. In einer bevorzugten Ausführungsform besitzen alle eingesetzten hydrolysierbaren Silane mit mindestens einem nicht hydrolysierbaren Substituenten an mindestens einem nicht hydrolisierbaren Substituenten mindestens eine funktionelle Gruppe. Bei dem kombinierten Einsatz von Epoxidsilan, Aminosilan und Anhydridsilan beträgt das Verhältnis von Epoxidsilan/Aminosilan/Anhydridsilan bevorzugt 0,5 bis 1,5/1 bis 3/1 bis 3, bezogen auf die funktionellen Gruppen.

Für die Herstellung des Hydrolysats oder Kondensats können gegebenenfalls weitere hydrolysierbare Verbindungen eines Elements M als Matrixbildner eingesetzt werden. Dabei handelt es sich insbesondere um Verbindungen mindestens eines Elements M aus den Hauptgruppen III bis V und/oder den Nebengruppen II bis IV des Periodensystems der Elemente. Vorzugsweise handelt es sich um hydrolysierbare Verbindungen von Si, Al, B, Sn, Ti, Zr, V oder Zn, insbesondere solche von Si, Al, Ti oder Zr, oder Mischungen aus zwei oder mehreren dieser Elemente. Hierzu sei angemerkt, daß selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können eingesetzt werden. Diese hydrolysierbaren matrixbildenden Verbindungen ohne nicht hydrolysierbare Gruppen haben insbesondere die allgemeine Formel MX_{b} (Formel (II)), wobei M wie vorstehend definiert ist, X wie vorstehend in Formel (I) definiert ist und b der Wertigkeit des Elements M entspricht (z.B. SiX₄, AlX₃). Die Verbindungen können auch in Form von Vorhydrolysaten oder -kondensaten eingesetzt werden.

Vorzugsweise machen die soeben genannten Verbindungen aber nicht mehr als 20 Mol-%, insbesondere nicht mehr als 10 Mol-% der insgesamt eingesetzten hydrolysierbaren monomeren Verbindungen aus. Besonders bevorzugt haben nicht mehr als 4 Mol-% bzw. 0 Mol-% der insgesamt eingesetzten hydrolysierbaren monomeren Verbindungen keinen nicht hydrolysierbaren Substituenten.

Die Beschichtungszusammensetzung umfaßt ferner mindestens eine Silber-Komplexverbindung. Dabei werden die Silberionen in Form von Komplexverbindungen eingesetzt. Die Komplexbildner sind besonders bevorzugt Chelatkomplexbildner, d.h. zwei- oder mehrzähnige Liganden, z.B. zwei- bis sechszähnige Komplexbildner. Bei der im Lösungsmittel löslichen Silberverbindung handelt es sich daher um einen Komplex von Silberionen mit Komplexbildnern, insbesondere Chelatkomplexbildnem. Solche Silber-Komplexverbindungen werden z.B. durch Zugabe einer Silberverbindung und des Komplexbildners zu einem Lösungsmittel gebildet, und der gebildete Silber-Komplex wird dann in Form dieser Lösung für die Beschichtungszusammensetzung verwendet.

Die Silber(I)-ionen bzw. die Silber-Komplexverbindungen können unter reduzierenden Bedingungen zu Metall-Kolloiden reagieren. Beispiele für Komplexbildner, die mit Silber(I)-Ionen eine Silber-Komplexverbindung bilden, sind Halogenidionen, wie lodid, Bromid und insbesondere Chlorid (bzw. die entsprechenden Halogenwasserstoffsäuren), Thioverbindungen, Thiocyanoverbindungen, Zucker, wie Pentosen und Hexosen, z.B. Glucose, β-Dicarbonylverbindungen, wie Diketone, z.B. Acetylacetonate, Ketoester, z.B. Acetessigsäurester und Allylacetoacetat, Etheralkohole, Carbonsäuren, Carboxylate, z.B. Acetat, Citrat oder Glykolat, Betaine, Diole, Polyole, auch polymere wie Polyalkylenglycole, Kronenether, Phosphorverbindungen, Mercaptoverbindungen, wie 3-Mercaptopropyltrimethoxysilan und 3-Mercaptopropyltriethoxysilan, und Aminoverbindungen. Besonders bevorzugt werden Mercaptoverbindungen, wie Mercaptosilane, Aminoverbindungen, wie Aminosilane, Mono-, Di-, Tri-, Tetraamine und höhere Polyamine, als Komplexbildner verwendet. Beispiele für organische Amine sind Triethylentetramin, Diethylentetramin, Diethylentriamin und Ethylendiamin. Beispiele für Aminosilane sind 3-Aminopropyltriethoxysilan, 3-Aminopropyltrimethoxysilan und insbesondere 2-Aminoethyl-3-aminopropyltrimethoxysilan (DIAMO), 2-Aminoethyl-3-aminopropyltriethoxysilan, Aminohexyl-3-aminopropyltrimethoxysilan und Aminohexyl-3-aminopropyltriethoxysilan. Vorzugsweise werden Silberdiamin-Komplexverbindungen eingesetzt, wobei Komplexbildner mit mindestens zwei Aminogruppen, die Chelatkomplexe bilden können, sich besonders eignen. Von den Amino-Komplexbildnem sind die Aminosilane besonders bevorzugt.

Die Komplexbildner werden in vorteilhafter Weise in die sich bildende Matrix eingebaut, insbesondere zuerst in Form einer schwachen Koordinationsbindung zu sich bildendem Ag⁰ und dann vorzugsweise in Form einer Oberflächenmodizierung der gebildeten Silberkolloide, was zur Stabilisierung der Silberkolloide in der Matrix beitragen kann. Die Oberflächenmodifizierung durch den Komplexbildner bewirkt eine verbesserte Verträglichkeit zwischen Matrix und oberflächenmodifiziertem Silberkolloid. Die Komplexbildner enthalten bevorzugt auch funktionelle oder nicht funktionelle Gruppen, die die Verträglichkeit der Silberkolloide mit der Matrix zusätzlich fördern. Dabei kann es sich beispielsweise um polare Gruppen (z.B. Hydroxy-, Amino- oder Carboxygruppen), die die Verträglichkeit mit hydrophilen Matrices bzw. dem entsprechenden Bindemittel fördern, oder um unpolare Gruppen (z.B. Alkylgruppen oder Arylgruppen), die die Verträglichkeit mit hydrophoben Matrices bzw. dem entsprechenden Bindemittel fördern, handeln.

Bei der Komplexierung erfolgt vermutlich eine Teilstabilisierung der Silberionen, so daß keine spontan oder durch Tageslicht induzierte Reduktion erfolgt. Überraschenderweise ergibt sich nach Reduktion zu Ag, etwa durch Wärmebehandlung oder UV-Bestrahlung unter Oxidation von vorhandenen organischen Verbindungen, trotz der umgebenden Komplexbildner eine hohe Mobilität von Ag⁰, so daß sich Kolloide, z.B. von mehreren tausend Atomen, bilden können.

Bei Verwendung eines Komplexbildners beträgt das Verhältnis von Ag zu vorhandenen komplexierenden Gruppierungen vorzugsweise 1:0,1 bis 1:500, insbesondere 1:1 bis 1:200. Ein zweizähniger Komplexbildner weist z.B. 2 komplexierende Gruppierungen auf. Die Komplexbildner können zumindest teilweise auch als Reduktionsmittel für die Silberionen fungieren. Weiter kommen gegebenenfalls die nachstehend beschriebenen Lösungsmittel, z.B. Alkohole oder Ketone, die sich bei der Hydrolyse und Kondensation bildenden Nebenprodukte, z.B. Alkohole, die eingesetzten hydrolysierbaren Verbindungen oder eine Kombination derselben als Reduktionsmittel in Betracht.

Gegebenenfalls können in die Beschichtungszusammensetzung auch nanoskalige anorganische Feststoffteilchen enthalten sein. Dadurch ergibt sich eine verbesserte mechanische Festigkeit (Kratzfestigkeit, Härte) der Beschichtung. Sie besitzen im allgemeinen eine Teilchengröße im Bereich von 1 bis 300 nm oder 1 bis 100 nm, vorzugsweise 2 bis 50 nm und besonders bevorzugt 5 bis 20 nm. Dieses Material kann in Form eines Pulvers eingesetzt werden, es wird jedoch vorzugsweise in Form eines, insbesondere sauer oder alkalisch, stabilisierten Sols verwendet Die nanoskaligen anorganischen Feststoffteilchen können aus beliebigen anorganischen Materialien bestehen, insbesondere bestehen sie jedoch aus Metallen oder Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, CU₂O, Ta₂O₅, Nb₂O₅, V₂O₅, MoO₃, oder WO₃, Chalkogeniden, Nitriden, Phosphiden, Phosphaten, Silikaten, Zirkonaten, Aluminaten oder Carbiden. Bei den nanoskaligen anorganischen Feststoffteilchen handelt es sich bevorzugt um ein Oxid, Oxidhydrat, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, Ti und Zr. Besonders bevorzugt werden Oxide bzw. Oxidhydrate eingesetzt. Bevorzugte nanoskalige anorganische Feststoffteilchen sind SiO₂ Al₂O₃, ITO, ATO, AIOOH, ZrO₂ und TiO₂. Beispiele für nanoskalige SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil-Produkte von Degussa.

Bei den nanoskaligen anorganischen Feststoffteilchen kann es sich um mit organischen Oberflächengruppen modifizierte nanoskalige anorganische Feststoffteilchen handeln. Bei der Oberflächenmodifizierung von nanoskaligen Feststoffteilchen handelt es sich um ein im Stand der Technik bekanntes Verfahren, wie es z.B. in WO 93/21127 (DE 4212633) und WO 98/51747 (DE 19746885) beschrieben ist.

In der Beschichtungszusammensetzung können weitere Additive enthalten sein, die in der Technik üblicherweise je nach Zweck und gewünschten Eigenschaften zugegeben werden. Konkrete Beispiele sind organische Verbindungen, Vemetzungsmittel, Lösungsmittel, organische und anorganische Farbpigmente, Farbstoffe, UV-Absorber, Gleitmittel, Verlaufsmittel, Netzmittel, Haftvermittler und Starter. Der Starter kann zur thermisch oder photochemisch induzierten Vernetzung dienen.

Gegebenenfalls können organische Verbindungen bzw. Vemetzungsmittel zur Beschichtungszusammensetzung zugegeben werden. Dabei kann es sich um organische Monomere, Oligomere oder Polymere handeln, die insbesondere mindestens zwei funktionelle Gruppen enthalten, die mit den funktionellen Gruppen der eingesetzten hydrolysierbaren Silane unter Bildung einer organischen Vernetzung reagieren können. Es handelt sich z. B. um aliphatische, cycloaliphatische oder aromatische Verbindungen. Bevorzugt eingesetzt werden organische Verbindungen mit mindestens zwei Epoxidgruppen oder mindestens zwei Aminogruppen. Der Einsatz der organischen Verbindungen kann zum Beispiel aus preislichen Gründen vorteilhaft sein. Die organische Verbindung wird insbesondere in einer Menge von nicht mehr als 30 Gew.% eingesetzt.

Einsetzbare organische Epoxidverbindungen können z.B. von aliphatischen, cycloaliphatischen oder aromatischen Estern oder Ethem oder Mischungen davon, z. B. auf Basis von Ethylenglycol, 1,4-Butandiol, Propylenglycol, 1,6-Hexandiol, Cyclohexandimethanol, Pentaerythrit, Bisphenol A, Bisphenol F oder Glycerin, abgeleitet sein. Konkrete Beispiele für organische Verbindungen mit mindestens zwei Epoxidgruppen sind 3,4-Epoxycyclohexylmethyl-3,4-epoxycyclohexancarboxylat, Bis-(3,4-epoxycyclohexyl)adipat, 1,4-Butandiolglycidether, Cyclohexandimethanoldiglycidether, Glycerintriglycidether, Neopentylglycoldiglycidether, Pentaerythritpolyglycidether, 2-Ethylhexylglycidether, 1,6-Hexandioldiglycidether, Propylenglycoldiglycidether, Polypropylenglycoldiglycidether, Bisphenol-A-diglycidether, Bisphenol-F-diglycidether, Epoxidharze auf der Basis von Bisphenol-A, Epoxidharze auf Basis von Bisphenol-F und Epoxidharze auf Basis von Bisphenol-A/F. Konkrete Beispiele für organische Verbindungen mit mindestens zwei Aminogruppen sind 1,3-Diaminopentan, 1,5-Diamino-2-methylpentan, 1,4-Diaminocyclohexan, 1,6-Diaminohexan, Diethylendiamin, Triethylentetramin oder Isophorondiamin. Selbstverständlich können auch organische Verbindungen eingesetzt werden, die verschiedene funktionelle Gruppen tragen.

Beispiele für geeignete Lösungsmittel sind Alkohole, vorzugsweise niedere aliphatische Alkohole, wie Methanol, Ethanol, 1-Propanol, i-Propanol und 1-Butanol, Ketone, vorzugsweise niedere Dialkylketone wie Aceton und Methylisobutylketon, Ether, vorzugsweise niedere Dialkylether, wie Diethylether, Dibutylether und THF, Isopropoxyethanol, aromatische Kohlenwasserstoffe, wie Toluol und Xylol, Ester, wie Essigsäureethylester, Butoxyethanol, chlorierte Kohlenwasserstoffe, wie Chloroform, Sulfoxide, Sulfone, Amide, wie Dimethylformamid und Dimethylacetamid, und deren Gemische. Prinzipiell muß kein Lösungsmittel eingesetzt werden, insbesondere dann, wenn die Hydrolyse der hydrolysierbaren Silane zur Bildung von Alkoholen, wie z.B. den vorstehend genannten, führen. Selbstverständlich kann aber auch dann ein Lösungsmittel eingesetzt werden.

Bei der Auswahl des Lösungsmittels ist auch darauf zu achten, daß die in der Beschichtungszusammensetzung enthaltene Silber-Komplexverbindung in dem Lösungsmittel vorzugsweise löslich ist. Daher ist es oft vorteilhaft, wenn als Lösungsmittel ein Lösungsmittel bzw. Lösungsmittelgemisch verwendet wird, das Wasser oder ein anderes polares Lösungsmittel, wie ein C₁-C₄ Alkohol, z.B. Methanol, Ethanol, n-Propanol, Isopropanol, Isobutanol oder n-Butanol, oder Aceton, umfaßt. Die Silberkomplex-Verbindung kann zunächst in einem Lösungsmittel gebildet werden und als Lösung zur Beschichtungszusammensetzung, das auch ein anderes Lösungsmittel enthalten kann, gegeben werden.

Die Hydrolyse oder (Vor)kondensation der hydrolysierbaren Verbindungen erfolgt insbesondere nach dem Sol-Gel-Verfahren. Das Sol-Gel-Verfahren ist ein dem Fachmann geläufiges Verfahren. Die Hydrolyse oder Kondensation wird entweder in Abwesenheit eines Lösungsmittels oder vorzugsweise in einem wäßrigen oder wäßrig/organischen Reaktionsmedium, gegebenenfalls in Gegenwart eines sauren oder basischen Kondensationskatalysators wie HCl, HNO₃ oder NH₃ durchgeführt. Man erhält eine partielle Hydrolyse oder (Poly)kondensation der hydrolysierbaren Verbindungen (Vorkondensat). Der Kondensationsgrad kann ebenso wie die Viskosität, z.B. durch das Lösungsmittel, in zweckmäßiger Weise eingestellt werden. Das so erhaltene flüssige Sol wird zur Herstellung der Beschichtungszusammensetzung eingesetzt. Die Silberverbindung in Form der Komplexverbindung und die anderen Komponenten können dann zugegeben werden. Natürlich können die Silberverbindungen, der Komplexbildner und die anderen Komponenten auch vor der Hydrolyse oder Kondensation in beliebiger Reihenfolge zugegeben werden.

Die Beschichtungszusammensetzung kann auf jede übliche Weise auf die Oberfläche des Gegenstandes aufgetragen werden. Hierbei können alle gängigen naßchemischen Beschichtungsverfahren eingesetzt werden. Beispiele sind Schleuderbeschichten, (Elektro)tauchbeschichten, Rakeln, Sprühen, Spritzen, Spinnen, Ziehen, Schleudern, Gießen, Rollen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint. Die Menge der aufgetragenen Beschichtungszusammensetzung wird so gewählt, daß die gewünschte Schichtdicke erzielt wird. Beispielsweise wird so gearbeitet, daß Trockenschichtdicken im Bereich von 1 bis 15 µm und bevorzugt 2 bis 5 µm erhalten werden. Ein Vorteil bei der vorliegenden Erfindung ist, daß die Schichtdicken sehr variabel gewählt werden können.

Nach Aufbringung der Beschichtungszusammensetzung auf den Gegenstand erfolgt gegebenenfalls eine Trocknung, z.B. bei Umgebungstemperatur (unter 40°C).

Die gegebenenfalls vorgetrocknete Beschichtung wird einer Behandlung mit Wärme und/oder Strahlung unterworfen, wobei die Silberkolloide gebildet werden. Es hat sich ergeben, daß die Silberkolloide durch die erfindungsgemäß eingesetzte Beschichtungszusammensetzung über aschenderweise bereits bei niedrigen Temperaturen aus den Silber-Komplexverbindungen gebildet werden. Bei der Behandlung kann es sich entweder um eine Wärmebehandlung oder um eine Bestrahlung handeln. In einer bevorzugten Ausführungsform erfolgt eine kombinierte Behandlung mit Wärme und Strahlung.

Die Bildung der Silberkolloide erfolgt insbesondere bei Temperaturen von unter 200°C, insbesondere unter 130°C, unter 100°C und sogar bereits unter 80°C. Die Silberkolloide werden z.B. unter alleiniger Wärmebehandlung im Bereich von 50 bis 100°C, bevorzugt von 60 bis 80°C bzw. 70 bis 80°C gebildet. Die Silberkolloide können auch nur durch Bestrahlung photochemisch bei Umgebungstemperatur gebildet werden. Zur Bestrahlung wird aktinische Strahlung, z. B. UV- oder Laserstrahlung oder Elektronenstrahlen, verwendet, um die Silberkolloide zu bilden. Besonders bevorzugt wird zur Bestrahlung UV-Strahlung eingesetzt.

Vorzugsweise wird eine Bestrahlung unter gleichzeitiger Wärmebehandlung durchgeführt. Dabei erfolgt bevorzugt eine Bestrahlung, insbesondere eine UV-Bestrahlung, bei einer Temperatur von 50 bis 100°C, insbesondere 60 bis 80°C. Diese kombinierte Behandlung findet z.B. über einen Zeitraum von 2-20 min statt. Bei einer entsprechenden Behandlung ohne Bestrahlung verlängert sich der Zeitraum der Behandlung um den Faktor 1,2 - 2.

Besonders wichtig ist die Erzeugung von größeren Kolloiden, z.B. mit 5 - 50 nm, 5 - 30 nm oder 5 - 20 nm und insbesondere 10 - 20 nm Durchmesser, da diese eine hohe Langzeitwirkung bewirken. Überraschenderweise hat sich gezeigt, daß durch UV-Strahlung und Wärmebehandlung Silberkolloide mit einem Durchmesser von z.B. 10 bis 50 nm oder 10 bis 30 nm besonders rasch gebildet werden, selbst wenn das Silber als Silberdiaminkomplex in die Zusammensetzung gegeben wird. Ohne UV-Bestrahlung werden mit der Wärmebehandlung kleinere Ag-Kolloide erzeugt (z.B. 5 - 20 nm). Die Silberkolloide werden gewissermaßen in situ in der aufgetragenen Beschichtung gebildet, wobei gegebenenfalls gleichzeitig die ersten (Weiter)Kondensations- und Vernetzungsreaktionen für die beginnende Härtung der Beschichtung stattfinden.

Die Menge an in der Beschichtungszusammensetzung eingesetzter Silber-Komplexverbindung richtet sich nach der gewünschten Konzentration an Silberkolloiden.

Die Härtung der Beschichtungszusammensetzung zur Erlangung der silberkolloidhaltigen Beschichtung kann bei Temperaturen von unter 300°C, bevorzugt nicht mehr als 200°C und insbesondere nicht mehr als 130°C erfolgen. Bevorzugt wird zur Härtung die Wärmebehandlung zur Bildung der Silberkolloide einfach fortgesetzt, also etwa bei Temperaturen unter 100°C oder unter 80°C, z.B. bei Temperaturen von 50 bis 100°C oder 60 bis 80°C. Die Dauer der Aushärtung kann mehrere Stunden, z.B: mehr als 2 h, und mehr betragen. Natürlich verkürzt sich der Zeitraum bei Erhöhung der Temperatur. Durch die Bildung der Silberkolloide bei niedrigen Temperaturen kann in vorteilhafter Weise ein bei den sonst erforderlichen höheren Temperaturen schnelles Aushärten der Beschichtung vermieden werden, so daß den Kolloiden Zeit zur Bildung gegeben wird. Andererseits finden bei der Wärmebehandlung zur Bildung der Kolloide schon erste Kondensationsprozesse und/oder Vernetzungsreaktionen in der Beschichtung statt, die zu einer erhöhten Viskosität führen, was zur Stabilisierung der Silberkolloide beiträgt. Gegebenenfalls ist auch eine photochemische Härtung möglich.

Es wird eine Beschichtung mit einer organisch modifizierten anorganischen Matrix erhalten, d.h. neben dem anorganischen Matrixgrundgerüst sind auch organische Seitengruppen, die gegebenenfalls Üntereinander oder über organische Verbindungen vernetzt sind, oder andere organische Bestandteile enthalten. Durch eine Temperaturerhöhung ist eine Reduktion des organischen Anteils möglich.

Durch das erfindungsgemäße Verfahren ist es nun möglich, Beschichtungszusammensetzungen herzustellen, die noch keine Silberkolloide enthalten, diese zur Beschichtung von Substraten, insbesondere Kunststoffsubstraten, zu verwenden und durch Behandlung mit Wärme und/oder Strahlung Silberkolloide der gewünschten Größe und in der gewünschten Konzentration von mehreren Gew.-% herzustellen. So können z.B. 0,1 bis 40 Gew.-% und insbesondere 1 bis 10 Gew.-% Silberkolloide in der fertigen Beschichtung vorhanden sein. Die Beschichtung kann bei niedrigen Temperaturen erhalten werden, so daß sich auch temperaturempfindliche Substrate, z.B. temperaturempfindliche Kunststoffe, ohne weiteres damit beschichten lassen. Außerdem zeigen die Beschichtungen ein sehr gutes Elastizitätsverhalten, so daß auch flexible Substrate, die sich bei Druck leicht (reversibel) verformen, beschichtet werden können.

Die erfindungsgemäßen beschichteten Gegenstände zeigen eine stark biozide Wirkung auch über längere Zeiträume, besonders in Verbindung mit flüssigen Medien. Es ergeben sich insbesondere mikrobiozid wirkende Beschichtungen auf verschiedenen Substraten in Verbindung mit Lösungen mit einer Wirksamkeit über mehrere Monate. Es hat sich gezeigt, daß die Verwendung solcher Beschichtungen auf Medikamentenfläschchen, die mit Augen oder der Nase in Berührung kommen, jede bakterielle Kontamination unterbindet.

Die erfindungsgemäß beschichteten Gegenstände eignen sich daher insbesondere für desinfizierende, konservierende, kosmetische, pharmazeutische oder medizinische Zwecke. Gegenstände aus dem pharmazeutischen bzw. medizinischen Bereich, insbesondere Behälter für Arzneimittel oder Gegenstände bzw. Komponenten, die mit dem menschlichen Körper in Berührung kommen und bei denen Keimfreiheit erforderlich ist, sind bevorzugte Anwendungsgebiete.

Die folgenden Beispiele erläutern die Erfindung, ohne sie zu beschränken.

### BEISPIEL 1

### Herstellung eines bakterizid beschichteten Substrats mit thermischer Härtung

a) Synthese der Silberkomplex-Lösung:
   0,28 g Silbemitrat werden in 30 g Ethanol (96%) angelöst. Nach 30 Minuten Rühren werden 13 g Isopropanol und 4 g Aceton zugegeben und es wird weitere 15 Minuten gerührt. Zur Komplexierung werden 1,7 g N-(2-Aminoethyl-3-aminopropyl)trimethoxysilan unter starkem Rühren langsam zugetropft.
b) Synthese der Beschichtungszusammensetzung:
   0,03 Mol 3-Glycidyloxypropyltrimethoxysilan (GPTMS) (7,09 g) werden mit 4,05 g 0,01 n Salpetersäure zwei Stunden bei Raumtemperatur vorhydrolysiert.
   Es werden 0,07 Mol Dihydro-3-(3-(triethoxysilyl)propyl)-2,5-furandion (GF 20) vorgelegt und unter Eiskühlung und starkem Rühren werden 0,07 Mol 3-Aminopropyltrimethoxysilan (APTMS) langsam zugetropft. Anschließend wird mit 33,9 g Isopropoxyethanol (IPE) verdünnt und 30 Minuten bei Raumtemperatur gerührt. Es werden 18,90 g 0,01 n Salpetersäure zugegeben und 15 Minuten bei Raumtemperatur gerührt. Danach wird mit 43,3 g IPE verdünnt und das GPTMS-Vorhydrolysat eingerührt.
   Nach 15 Minuten Rühren werden 28,38 g der in a) hergestellten Silberkomplex-Lösung zugegeben und es wird weitere 15 Minuten bei Raumtemperatur gerührt.
c) Auftrag und Behandlung:
   Der Auftrag auf das Substrat kann z.B. durch Tauchen, Fluten oder Spinnen erfolgen. Die Schichten werden auf Glas eine Stunde bei 130°C, auf PE 6 Stunden bei 80°C ausgehärtet.

### BEISPIEL 2

### Herstellung eines bakterizid beschichteten Substrats unter photochemischer Erzeugung der Silberkolloide

0,03 Mol 3-Glycidyloxypropyltrimethoxysilan (GPTMS) werden mit 4,05 g 0,01 n Salpetersäure zwei Stunden bei Raumtemperatur vorhydrolysiert. Es werden 0,07 Mol Dihydro-3-(3-(triethoxysilyl)propyl)-2,5-furandion (GF 20) vorgelegt und unter Eiskühlung und starkem Rühren werden 0,07 Mol 3-Aminopropyltrimethoxysilan (APTMS) langsam zugetropft. Anschließend wird mit 33,9 g Isopropoxyethanol (IPE) verdünnt und 30 Minuten bei Raumtemperatur gerührt. Es werden 18,90 g 0,01 n Salpetersäure zugegeben und 15 Minuten bei Raumtemperatur gerührt. Danach wird mit 43,3 g IPE verdünnt und das GPTMS-Vorhydrolysat eingerührt.

Nach 15 Minuten Rühren werden 28,38 g der in Beispiel 1a) hergestellten Silberkomplex-Lösung zugegeben und es wird weitere 15-Minuten bei Raumtemperatur gerührt.

Der Auftrag der Beschichtungszusammensetzung auf ein Substrat kann z.B. durch Tauchen, Fluten oder Spinnen erfolgen. Zur Erzeugung der Ag-Kolloide wird das beschichtete Substrat im UV-Härtungsstand der Firma Beltron bei halber Leistung beider Lampen mit einer Geschwindigkeit von 0,8 m/min dreimal belichtet. Nach UV-Belichtung werden die Schichten auf Glas eine Stunde bei 130°C, auf PE 6 Stunden bei 80°C ausgehärtet.

### BEISPIEL 3

### Herstellung eines bakterizid beschichteten Substrats mit einem wasserbasierten System unter photochemischer Erzeugung der Silberkolloide

0,5 Mol 3-Glycidyloxypropyltriethoxysilan GPTES (139,21 g) werden mit 1,5 Mol 0,1 n Salzsäure (27 g) 5 Stunden bei Raumtemperatur hydrolysiert. Das dabei entstandene Ethanol wird am Rotationsverdampfer bei 35°C Badtemperatur und 40 mbar abgezogen. Anschließend werden 463,0 g Levasil 200 S (Kieselsol) 16 Stunden bei Raumtemperatur eingerührt. 5 Mol% (bezogen auf GPTES) N-(2-Aminoethyl-3-aminopropyl)trimethoxysilan (DIAMO) (5,56 g) werden unter starkem Rühren langsam zugetropft und eine Stunde eingerührt.

326,7 g (0,05 Mol Ag) der in Beispiel 1a) hergestellten Silberkomplex-Lösung werden zum Sol gegeben und 30 Minuten eingerührt. Anschließend wird das silberhaltige Sol durch ein 5 µm Filter filtriert.

Der Auftrag der Beschichtungszusammensetzung auf ein Substrat kann z.B. durch Tauchen, Fluten oder Spinnen erfolgen. Zur Erzeugung der Silberkolloide werden die beschichteten Substrate im UV-Härtungsstand (Typ 60/II) der Firma Beltron bei halber Leistung beider Lampen und einer Bandgeschwindigkeit von 3 m/min dreimal belichtet. Die belichteten Schichten (z.B. auf Stahl oder Aluminium) werden bei 130°C vier Stunden gehärtet.

## Patentansprüche

1. Mikrobizid beschichteter Gegenstand, insbesondere Behälter, **dadurch gekennzeichnet dass** auf mindestens einem Teil des Gegenstandes eine Beschichtung mit einer Silberkolloide enthaltenden, organisch modifizierten anorganischen Matrix vorhanden ist, die erhältlich ist durch Aufbringen einer Beschichtungszusammensetzung umfassend a) ein Hydrolysat oder Kondensat auf Basis von mindestens einem hydrolysierbaren Silan mit mindestens einem nicht hydrolysierbaren Substituenten und b) eine Silber-Komplexverbindung, auf die Oberfläche des Gegenstandes und Behandlung mit Wärme und/oder Strahlung unter Bildung der silberkolloidhakigen Beschichtung.

2. Mikrobizid beschichteter Gegenstand nach Anspruch 1, **dadurch gekennzeichnet, dass** der Gegenstand zumindest an den beschichteten Teilen eine fläche aufweist oder aus Kunststoff besteht.

3. Mikrobizid beschichteter Gegenstand nach Anspruch 1 oder 2, **dadurch gekennzeichnet, dass** die Silber-Komplexverbindung eine Silberdiamin-Komplexverbindung ist.

4. Mikrobizid beschichteter Gegenstand nach Anspruch 3, **dadurch gekennzeichnet, dass** die Silber-Komplexverbindung eine Silberverbindung mit 2-Aminoethy-3-aminopropyltrimethoxysilan, 2-Aminoethyl-3-aminopropyltriethoxysilan, Aminohexyl-3-aminopropyltriethoxysilan oder Aminohexyl-3-aminopropyltrimethoxysilan ist.

5. Mikrobizid beschichteter Gegenstand nach einem der Ansprüche 1 bis 4, **dadurch gekennzeichnet, dass** die Beschichtungszusammensetzung ein Hydrolysat oder Kondensat auf Basis eines oder mehrerer Silane der allgemeinen Formel (I)
RₐSiX₍₄₋ₐ₎ (I)
umfasst, worin die Reste R gleich oder verschieden sind und nicht hydrolysierbare Gruppen darstellen, die Reste X gleich oder verschieden sind und hydrolysierbare Gruppen oder Hydroxylgruppen bedeuten und a den Wert 1, 2 oder 3 hat.

6. Mikrobizid beschichteter Gegenstand nach einem der Ansprüche 1 bis 5, **dadurch gekennzeichnet, dass** die Beschichtungszusammensetzung ein Hydrolysat oder Kondensat auf Basis.
a) mindestens eines hydrolysierbaren Silans, das an mindestens einem nicht hydrolysierbaren Substituenten eine oder mehrere Epoxidgruppen aufweist,
b) mindestens eines hydrolysierbaren Silans, das an mindestens einem nicht hydrolysierbaren Substituenten eine oder mehrere Aminogruppen aufweist, und
c) mindestens eines hydrolysierbaren Silans, das an mindestens einem nicht hydrolysierbaren Substituenten eine oder mehrere Säureanhydridgruppen aufweist,
umfasst.

7. Verfahren zur Herstellung eines mikrobizid beschichteten Gegenstandes mit einer silberkolloidhaltigen Beschichtung, die eine organisch modifizierte anorganische Matrix aufweist, bei dem man eine Beschichtungszusammensetzung, umfassend
a) ein Hydrolysat oder Kondensat auf Basis von mindestens einem hydrolysierbaren Silan mit mindestens einem nicht hydrolysierbaren Substituenten und
b) eine Silber-Komplexverbindung, auf zumindest einem Teil der Oberfläche des Gegenstandes aufbringt und mit Wärme und/oder Strahlung unter Bildung der silberkolloidhaltigen Beschichtung behandelt.

8. Verfahren nach Anspruch 7, **dadurch gekennzeichnet, dass** die Behandlung bei einer Temperatur unter 200°C, insbesondere nicht mehr als 130°C, durchgeführt wird.

9. Verfahren nach Anspruch 7 oder 8, **dadurch gekennzeichnet, dass** die Silberkolloide durch UV-Bestrahlung und/oder Wärmebehandlung bei Temperaturen von 50 bis 100°C erhalten werden.

10. Verwendung eines mikrobizid beschichteten Gegenstandes nach einem der Ansprüche 1 bis 6 für desinfizierende, konservierende, kosmetische, pharmazeutische oder medizinische Zwecke.

11. Verwendung eines mikrobizid beschichteten Gegenstandes nach Anspruch 10 zur Aufbewahrung von Feststoffen oder Flüssigkeiten, insbesondere Arzneimitteln.

## Claims

1. Microbicidally coated article, especially a container, **characterized in that** on at least part of the article there is a coating comprising an organically modified inorganic matrix comprising silver colloids which is obtainable by application of a coating composition comprising a) a hydrolysate or condensate based on at least one hydrolysable silane with at least one non-hydrolysable substituent and b) a silver complex compound to the surface of the article and treatment with heat and/or radiation to form the silver colloid coating.

2. Microbicidally coated article according to Claim 1, **characterized in that** the article at least on the coated parts has a plastics surface or is composed of plastic.

3. Microbicidally coated article according to Claim 1 or 2, **characterized in that** the silver complex compound is a silver diamine complex compound.

4. Microbicidally coated article according to Claim 3, **characterized in that** the silver complex compound is a silver compound with 2-aminoethyl-3-aminopropyltrimethoxysilane, 2-aminoethyl-3-aminopropyltriethoxysilane, aminohexyl-3-aminopropyltriethoxysilane or aminohexyl-3-aminopropyltrimethoxysilane.

5. Microbicidally coated article according to one of Claims 1 to 4, **characterized in that** the coating composition is a hydrolysate or condensate based on one or more silanes of the general formula (I)
RₐSiX₍₄₋ₐ₎ (I)
in which the radicals R are identical or different and represent non-hydrolysable groups, the radicals X are identical or different and denote hydrolysable groups or hydroxyl groups, and a has the value 1, 2 or 3.

6. Microbicidally coated article according to one of Claims 1 to 5, **characterized in that** the coating composition comprises a hydrolysate or condensate based on
a) at least one hydrolysable silane having one or more epoxide groups on at least one non-hydrolysable substituent,
b) at least one hydrolysable silane having one or more amino groups on at least one non-hydrolysable substituent, and
c) at least one hydrolysable silane having one or more acid anhydride groups on at least one non-hydrolysable substituent.

7. Method of producing a microbicidally coated article having a silver colloid coating comprising an organically modified inorganic matrix, wherein a coating composition comprising a) a hydrolysate or condensate based on at least one hydrolysable silane with at least one non-hydrolysable substituent and b) a silver complex compound is applied to at least part of the surface of the article and is treated with heat and/or radiation to form the silver colloid coating.

8. Method according to Claim 7, **characterized in that** the treatment is conducted at a temperature below 200°C, in particular not more than 130°C.

9. Method according to Claim 7 or 8, **characterized in that** the silver colloids are obtained by UV irradiation and/or heat treatment at temperatures from 50 to 100°C.

10. Use of a microbicidally coated article according to one of Claims 1 to 6 for purposes of disinfection, preservation, cosmetic, pharmaceutical or medical purposes.

11. Use of a microbicidally coated article according to Claim 10 for the keeping of solids or liquids, especially pharmaceuticals.

## Revendications

1. Objet, en particulier récipient, à revêtement microbicide, **caractérisé en ce qu'**au moins une partie de l'objet est revêtue d'une couche d'une matrice inorganique organo-modifiée, contenant un colloïde à l'argent, qu'on obtient par dépôt, sur la surface de l'objet, d'une composition de revêtement qui comprend :
a) un hydrolysat ou un condensat, à base d'au moins un silane hydrolysable comportant au moins un substituant non-hydrolysable,
b) et un complexe d'argent, et traitement thermique et/ou d'irradiation, grâce à quoi se forme la couche de revêtement contenant un colloïde à l'argent.

2. Objet à revêtement microbicide, conforme à la revendication 1, **caractérisé en ce que** l'objet est en matière plastique ou comporte, au moins sur la partie revêtue, une surface en matière plastique.

3. Objet à revêtement microbicide, conforme à la revendication 1 ou 2, **caractérisé en ce que** le complexe d'argent est un complexe d'argent et de diamine.

4. Objet à revêtement microbicide, conforme à la revendication 3, **caractérisé en ce que** le complexe d'argent est un complexe d'argent et de 2-aminoéthyl-3-aminopropyl-triméthoxysilane, de 2-aminoéthyl-3-aminopropyl-triéthoxysilane, d'aminohexyl-3-aminopropyl-triéthoxysilane, ou d'aminohexyl-3-aminopropyl-triméthoxysilane,

5. Objet à revêtement microbicide, conforme à l'une des revendications 1 à 4, **caractérisé en ce que** la composition de revêtement comprend un hydrolysat ou un condensat à base d'un ou de plusieurs silanes de formule générale (I) :
RₐSiX(₄₋ₐ) (I)
dans laquelle les restes symbolisés par R sont des groupes non hydrolysables, identiques ou différents, les restes symbolisés par X sont des groupes hydrolysables, identiques ou différents, et a vaut 1, 2 ou 3.

6. Objet à revêtement microbicide, conforme à l'une des revendications 1 à 5, **caractérisé en ce que** la composition de revêtement comprend un hydrolysat ou un condensat à base
a) d'au moins un silane hydrolysable qui comporte un ou plusieurs groupes époxyde faisant partie d'au moins un susbtituant non hydrolysable,
b) d'au moins un silane hydrolysable qui comporte un ou plusieurs groupes amino faisant partie d'au moins un susbtituant non hydrolysable,
c) et d'au moins un silane hydrolysable qui comporte un ou plusieurs groupes anhydride d'acide faisant partie d'au moins un susbtituant non hydrolysable.

7. Procédé de fabrication d'un objet à revêtement microbicide comportant une couche qui contient un colloïde à l'argent et présente une matrice inorganique organo-modifiée, dans lequel procédé l'on dépose, sur au moins une partie de la surface de l'objet, une composition de revêtement qui comprend :
a) un hydrolysat ou un condensat, à base d'au moins un silane hydrolysable comportant au moins un substituant non-hydrolysable,
b) et un complexe d'argent, et l'on effectue un traitement thermique et/ou d'irradiation, grâce à quoi se forme la couche de revêtement contenant un colloïde à l'argent.

8. Procédé conforme à la revendicatton 7, **caractérisé en ce que** l'on effectue le traitement à une température inférieure à 200 °C, et en particulier, à une température qui ne dépasse pas 130 °C.

9. Procédé conforme à la revendication 7 ou 8, **caractérisé en ce que** l'on obtient le colloïde à l'argent par irradiation aux rayons UV et/ou traitement thermique à une température de 50 à 100 °C.

10. Emploi d'un objet à revêtement microbicide, conforme à l'une des revendications 1 à 6, à des fins de désinfection, de conservation, cosmétiques, pharmaceutiques ou médicales.

11. Emploi, conforme à la revendication 10, d'un objet à revêtement microbicide, pour conserver des solides ou des liquides, en particulier des médicaments.
